(19)

Europäisches
Patentamt
European
Patent Office
Office européen
des brevets

(11) **EP 4 693 608 A1**

(12) **EUROPEAN PATENT APPLICATION**
published in accordance with Art. 153(4) EPC

(43) Date of publication:
**11.02.2026 Bulletin 2026/07**

(21) Application number: **24778741.9**

(22) Date of filing: **09.02.2024**

(51) International Patent Classification (IPC):
*H01M 10/613* [(2014.01)]   *F16L 59/02* [(2006.01)]
*H01M 10/625* [(2014.01)]   *H01M 10/651* [(2014.01)]
*H01M 10/658* [(2014.01)]

(52) Cooperative Patent Classification (CPC):
**F16L 59/02; H01M 10/613; H01M 10/625;**
**H01M 10/651; H01M 10/658; H01M 50/291;**
**H01M 50/293;** Y02E 60/10

(86) International application number:
**PCT/JP2024/004664**

(87) International publication number:
**WO 2024/202596 (03.10.2024 Gazette 2024/40)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **29.03.2023 JP 2023053781**

(71) Applicant: **IBIDEN CO., LTD.**
**Ogaki-shi, Gifu 503-8604 (JP)**

(72) Inventor: **HIGUCHI Tatsuhiro**
**Ibi-gun, Gifu 501-0695 (JP)**

(74) Representative: **Hoffmann Eitle**
**Patent- und Rechtsanwälte PartmbB**
**Arabellastraße 30**
**81925 München (DE)**

(54) **HEAT TRANSFER SUPPRESSION SHEET, METHOD FOR PRODUCING SAME, AND BATTERY PACK**

(57)    To provide a heat transfer suppression sheet having an excellent heat insulation performance, a method for producing the same, and a battery pack including the heat transfer suppression sheet. A heat transfer suppression sheet (10) contains a dry silica particle (1) and has pores (2) therein. The dry silica particles (1) has an average primary particle diameter of 25 nm or less, and a total volume of pores having a mode diameter of 68 nm or less is 10% or more with respect to a total volume of the pores. A method for producing the heat transfer suppression sheet (10) includes a processing step of processing a material mixture containing the dry silica particle (1) into a sheet shape by a dry method, and the dry silica particles (1) has an average primary particle diameter of 25 nm or less.

FIG.1

EP 4 693 608 A1

**Description**

TECHNICAL FIELD

The present invention relates to a heat transfer suppression sheet, a method for producing the same, and a battery pack including the heat transfer suppression sheet.

BACKGROUND ART

In recent years, from the viewpoint of environmental protection, an electric vehicle or a hybrid vehicle driven by an electric motor has been actively developed. The electric vehicle or the hybrid vehicle is equipped with a battery pack in which a plurality of battery cells are connected in series or in parallel to serve as a power source for a driving electric motor.
In addition, a lithium ion secondary battery, which has higher capacity and is capable of higher output than a lead-acid battery, a nickel-metal hydride battery, or the like, is mainly used for the battery cells. In the case where a certain battery cell suddenly rises in temperature due to an internal short circuit or overcharging of the battery, and then causes thermal runaway that continues to generate heat, the heat from the battery cell that has experienced thermal runaway may propagate to other adjacent battery cells, thereby causing thermal runaway in other battery cells.
As a method of suppressing the propagation of heat from the battery cell that has experienced thermal runaway as described above, a method of interposing a heat insulation sheet between battery cells is generally used.
For example, Patent Literature 1 discloses a heat insulation sheet for a battery pack, which contains a first particle composed of a silica nanoparticle and a second particle composed of a metal oxide, in which a content of the first particle is limited. In addition, Patent Literature 1 discloses that the heat insulation sheet may contain a binding material composed of at least one kind selected from a fiber, a binder, and a heat-resistant resin.
In addition, the above Patent Literature 1 discloses that dry silica or wet silica can be used as the first particle, and this heat insulation sheet can be produced by a dry molding method or a wet papermaking method.

CITATION LIST

PATENT LITERATURE

Patent Literature 1: JP2021-34278A

SUMMARY OF INVENTION

TECHNICAL PROBLEM

Recently, a battery pack for use in an electric vehicle (EV) or the like is sometimes disposed under a passenger's floor. In this case, in order to ensure safety of the passenger, a heat transfer suppression sheet having a more excellent heat insulation performance is required.
The present invention has been made in view of the above problems, and an object of the present invention is to provide a heat transfer suppression sheet having an excellent heat insulation performance, a method for producing the same, and a battery pack including the heat transfer suppression sheet.

SOLUTION TO PROBLEM

The above object of the present invention is achieved by the following configuration [1] relating to a heat transfer suppression sheet.

[1] A heat transfer suppression sheet including a dry silica particle, in which

the heat transfer suppression sheet has pores,
the dry silica particle has an average primary particle diameter of 25 nm or less, and
a total volume of the pores having a mode diameter of 68 nm or less is 10% or more with respect to a total volume of the pores.
Preferred embodiments of the present invention relating to the heat transfer suppression sheet relate to the following [2] to [6].

[2] The heat transfer suppression sheet according to [1], in which the average primary particle diameter of the dry silica particle is 7 nm or more.

[3] The heat transfer suppression sheet according to [1] or [2], in which the total volume of the pores is 2.0 (cc/g) or more.

[4] The heat transfer suppression sheet according to any one of [1] to [3], in which a content of the dry silica particle is 50 mass% or more and 80 mass% or less) with respect to a total mass of the heat transfer suppression sheet.

[5] The heat transfer suppression sheet according to any one of [1] to [4], further including:

at least one kind of inorganic particle selected from titania, zircon, zirconia, silicon carbide, zinc oxide, and alumina.

[6] The heat transfer suppression sheet according to any one of [1] to [5], further including:

an organic fiber.

The above object of the present invention is achieved by the following configuration [7] relating to a method for producing a heat transfer suppression sheet.

[7] A method for producing a heat transfer suppression sheet, which is a method for producing the heat transfer suppression sheet according to any one of [1] to [6], the method including:

a processing step of processing a material mixture containing the dry silica particle into a sheet shape by a dry method, in which

the dry silica particle has an average primary particle diameter of 25 nm or less.

Preferred embodiments of the present invention relating to the method for producing a heat transfer suppression sheet relate to the following [8] and [9].

[8] The method for producing a heat transfer suppression sheet according to [7], in which the content of the dry silica particle is 50 mass% or more and 80 mass% or less with respect to a total mass of a solid component in the material mixture.

[9] The method for producing a heat transfer suppression sheet according to [7] or [8], in which

the material mixture contains an organic fiber, and

the organic fiber contains a binder fiber having a core-sheath structure including a core portion extending in a longitudinal direction thereof and a sheath portion formed to cover an outer peripheral surface of the core portion.

The above object of the present invention is achieved by the following configuration [10] relating to a battery pack.

[10] A battery pack including: a plurality of battery cells; and the heat transfer suppression sheet according to any one of [1] to [6], in which the plurality of battery cells are connected in series or in parallel.

ADVANTAGEOUS EFFECTS OF INVENTION

Since the heat transfer suppression sheet according to the present invention contains a dry silica particle having a controlled average primary particle diameter, has pores therein, and has a limited volume ratio of pores having a predetermined diameter or less, an excellent heat insulation performance can be obtained.

In addition, with the method for producing a heat transfer suppression sheet according to the present invention, since the heat transfer suppression sheet is produced by a dry method using a dry silica particle having a controlled average primary particle diameter, the size and volume ratio of pores can be controlled, and a heat transfer suppression sheet having an excellent heat insulation performance can be easily produced.

With the battery pack according to the present invention, since the heat transfer suppression sheet has an excellent heat insulation performance as described above, thermal runaway of the battery cells in the battery pack and spread of flame to the outside of the battery case can be suppressed.

BRIEF DESCRIPTION OF DRAWINGS

[Fig. 1] Fig. 1 is a schematic diagram showing an enlarged view of a portion of a heat transfer suppression sheet according to an embodiment of the present invention.

[Fig. 2] Fig. 2 is a graph showing a relationship between a specific surface area of a dry silica particle and a heat insulation performance in the case where the horizontal axis represents the specific surface area of the dry silica particle and the vertical axis represents a non-heated surface peak temperature in the heat transfer suppression sheet.

[Fig. 3] Fig. 3 is a graph showing a pore diameter distribution for each average primary particle diameter of the dry silica particle in the case where the vertical axis represents a pore volume and the horizontal axis represents a pore diameter.

[Fig. 4] Fig. 4 is a graph showing a relationship between the average primary particle diameter and the pore diameter in the case where the vertical axis represents the pore diameter (mode diameter) and the horizontal axis represents the average primary particle diameter of the dry silica particle.

[Fig. 5] Fig. 5 is a graph showing a relationship between the average primary particle diameter and the volume ratio in the case where the vertical axis represents a volume ratio of pores having a mode diameter of 68 nm or less and the horizontal axis represents the average primary particle diameter of the dry silica particle.

[Fig. 6] Fig. 6 is a schematic diagram showing a battery pack according to an embodiment of the present invention.

DESCRIPTION OF EMBODIMENTS

The inventor of the present invention has conducted intensive studies on a heat transfer suppression sheet capable of further improving a heat insulation performance. As a result, it has been found that it is effective to contain dry silica in the heat transfer suppression sheet, to appropriately define an average primary particle diameter of the dry silica, and to define a volume ratio of pores having a predetermined size formed in the heat transfer suppression sheet.

Hereinafter, a heat transfer suppression sheet, a method for producing the same, and a battery pack according to an embodiment of the present invention will be described in detail. Note that, the present invention is not limited to the embodiment described below, and can be freely changed and implemented without departing from the gist of the present invention.

[Heat Transfer Suppression Sheet]

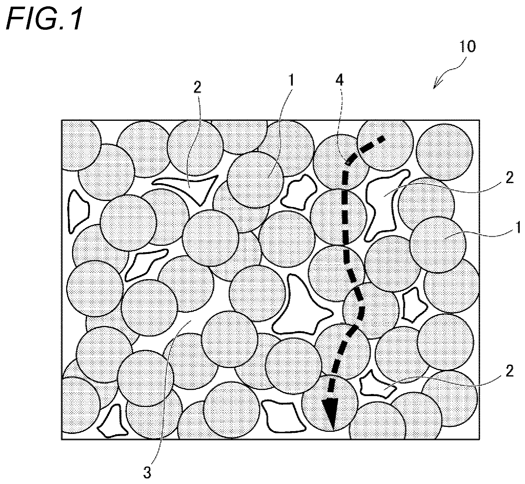

Fig. 1 is a schematic diagram showing an enlarged view of a portion of the heat transfer suppression sheet according to the embodiment of the present invention. As shown in Fig. 1, a heat transfer suppression sheet 10 contains a dry silica particle 1 and has a plurality of pores 2 therein. Note that, the dry silica particle 1 is retained by, for example, a binder portion 3. First, the dry silica particle 1 and the pores 2 will be described in detail.

<Dry Silica Particle>

The dry silica particle 1 contained in the heat transfer suppression sheet 10 according to the present embodiment is composed of silica having a high heat insulation property, and is, for example, a nanoparticle having a spherical shape or a shape close to a spherical shape and having an average primary particle diameter of 25 nm or less. Such a nanoparticle has a low density and thus suppresses conductive heat transfer, and pores are finely dispersed, so that an excellent heat insulation property of suppressing the convective heat transfer can be obtained.

In addition, since the dry silica particle 1 has an excellent compression property, excellent effects can be obtained in a battery pack in which the heat transfer suppression sheet 10 is interposed between a plurality of battery packs. Specifically, even in the case where the heat transfer suppression sheet 10 is compressed due to expansion caused by thermal runaway of a battery cell and the internal density increases, the effect of suppressing an increase in conductive heat transfer of the heat transfer suppression sheet 10 is obtained. This is thought to be because the nanoparticle tends to form fine voids between particles due to a repulsive force caused by static electricity, and the bulk density thereof is low, so that the particle is used for filling so as to provide a cushioning property.

(Average primary particle diameter of dry silica particle: 25 nm or less)

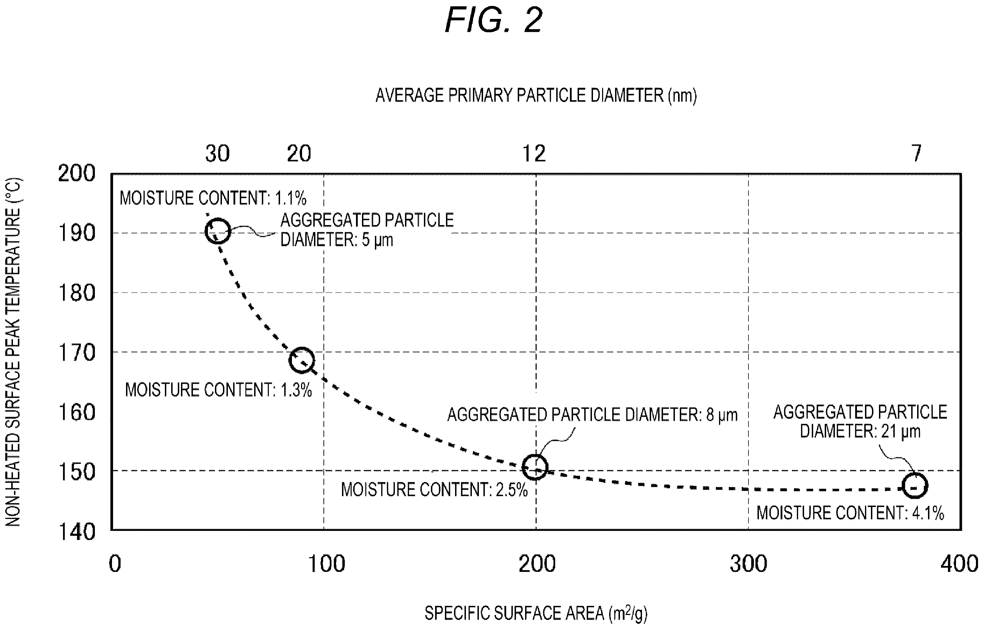

Fig. 2 is a graph showing a relationship between a specific surface area of the dry silica particle 1 and a heat insulation performance in the case where the horizontal axis represents the specific surface area of the dry silica particle 1 and the vertical axis represents a non-heated surface peak temperature in a heat transfer suppression sheet. The non-heated surface peak temperature on the vertical axis is a value obtained by heating, among a pair of main surfaces of each of heat transfer suppression sheets produced using the dry silica particle 1 having various average primary particle diameters, one main surface at a temperature of, for example, 800°C for a predetermined time in a pressurized where at a predetermined pressure, and measuring a peak temperature of the other main surface. Note that, these heat transfer suppression sheets are all produced under the same conditions, and only the average primary particle diameter of the dry silica particle 1 is changed. In addition, in Fig. 2, an aggregated particle diameter and a moisture content of dry silica particles having respective average primary particle diameters are also shown.

As shown in Fig. 2, in the case where the average primary particle diameter of the dry silica particle 1 is 30 nm, the non-heated surface peak temperature is higher than 190°C, and an excellent heat insulation performance cannot be obtained. It is thought that this is because when the average primary particle diameter of the dry silica particle 1 is large, a contact area between the particles increases and the amount of contact points between the particles decreases, and thus heat conduction in which heat is conducted between solids increases. On the other hand, when the average primary particle diameter of the dry silica particle 1 is 25 nm or less, as shown in Fig. 1, the contact area between the dry silica particles 1 decreases, and the amount of contact points between the particles increases (interface resistance increases), so that heat conduction 4 between solids decreases. Therefore, the average primary particle diameter of the dry silica particle 1 is 25 nm or less, preferably 20 nm or less, and more preferably 15 nm or less.

On the other hand, in the present embodiment, the lower limit of the average primary particle diameter of the dry silica particle 1 is not particularly limited. As described above, when the average primary particle diameter of the dry silica particle 1 is small, the heat conduction 4 decreases and the heat insulation performance is improved. However, depending on storage conditions of the heat transfer suppression sheet 10, the amount of moisture adsorbed to the heat transfer suppression sheet 10 may increase as the specific surface area of the dry silica particle 1 increases. When the amount of moisture contained in the heat transfer suppression sheet 10 increases, the particles aggregate to increase the contact area, and a diameter of the pores 2 formed in the heat transfer suppression sheet 10 also increases since the aggregated particle diameter increases, as shown in Fig. 2. As a result, heat transfer due to heat conduction and convection increases, and thus the heat insulation performance is saturated. Therefore, in order to suppress adsorption of moisture to the heat transfer suppression sheet 10 and further improve the heat insulation performance, the average primary particle diameter of the dry silica particle 1 is preferably 7 nm or more.

Note that, the dry silica particle 1 having an average primary particle diameter of 25 nm or less has a loose bulk density of about 0.005 $(g/cm^3)$. Therefore, for example, even in the case where the battery cells disposed on both sides of the heat transfer suppression sheet 10 thermally expand and a large compressive stress is applied to the heat transfer suppression sheet 10, the size of the contact point between the dry silica particles 1 does not remarkably increase, and the heat insulation property can be maintained.

(Content of dry silica particle: 50 mass% or more and 80 mass% or less)

When a content of the dry silica particle in the heat transfer suppression sheet with respect to a total mass of the heat transfer suppression sheet is appropriately defined, a volume ratio of pores having a predetermined mode diameter to be described later can be controlled. That is, in order to obtain the volume ratio of pores to be described later, the content of the dry silica particle is preferably 50 mass% or more and 80 mass% or less. Note that, the content of the dry silica particle in the heat transfer suppression sheet can be measured by a chemical analysis method such as X-ray fluorescence (XRF) or inductively coupled plasma atomic emission spectroscopy (ICP-AES).

<Pore>

(Total volume of pores having mode diameter of 68 nm or less: 10% or more)

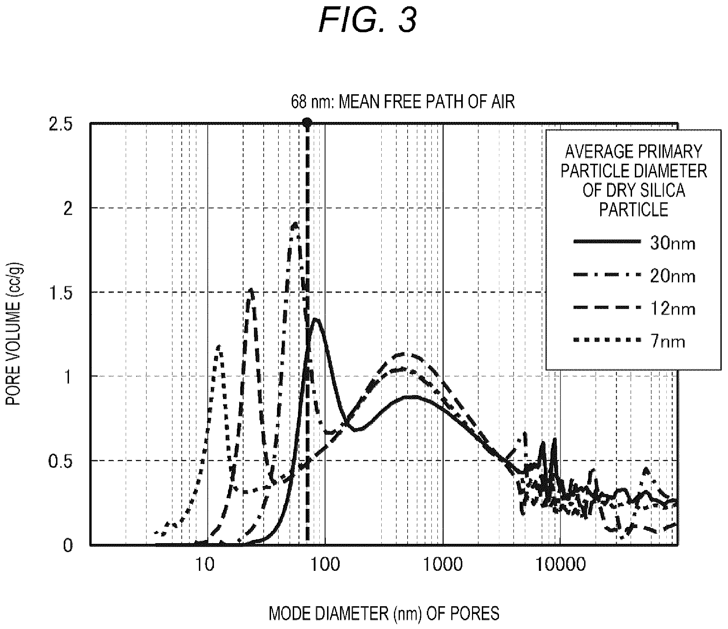

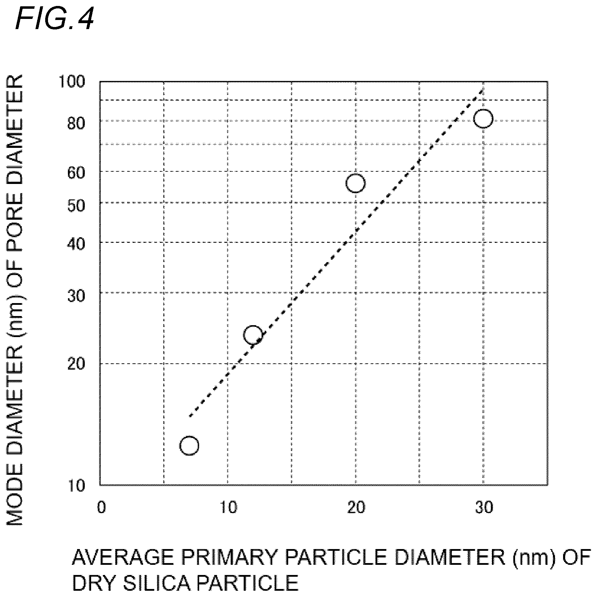

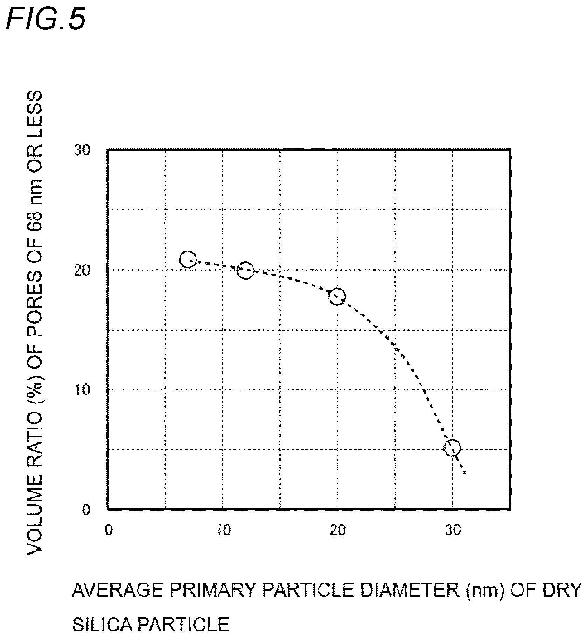

The heat transfer suppression sheet 10 according to the present embodiment has the plurality of pores 2 therein. Hereinafter, the influence of a size of the pores 2 on the heat insulation performance will be described in detail. Fig. 3 is a graph showing a pore diameter distribution for each average primary particle diameter of the dry silica particle 1 in the case where the vertical axis represents a pore volume and the horizontal axis represents a pore diameter. Fig. 4 is a graph showing a relationship between the average primary particle diameter and the pore diameter in the case where the vertical axis represents the pore diameter (mode diameter) and the horizontal axis represents the average primary particle diameter of the dry silica particle. Fig. 5 is a graph showing a relationship between the average primary particle diameter and the volume ratio in the case where the vertical axis represents a volume ratio of pores having a mode diameter of 68 nm or less and the horizontal axis represents the average primary particle diameter of the dry silica particle. Note that, in Fig. 3, a peak appearing in a pore diameter range of 100 nm or less represents pores derived from a primary particle of the dry silica particle 1. In addition, a gentle peak appearing in a range pore diameter of more than 100 nm represents pores derived from a secondary particle and a tertiary particle of the dry silica particle 1.

The size of the pores 2 influences the heat insulation performance. That is, when the size of the pores 2 is more than 68 nm, which is a mean free path of air, collision between molecules and collision between molecules and a wall surface occur, and heat is transferred by both convection and heat conduction. On the other hand, when the size of the pores 2 is equal to or smaller than the mean free path of air, the collision between the molecules and the wall surface is more dominant than the collision between the molecules, and the heat transfer due to the convection is suppressed. Therefore, the inventor of the present invention has found that by defining the volume ratio of the pores 2 having a diameter of 68 nm or less, which is the mean free path of air, the heat transfer due to the convection can be suppressed, and the heat insulation performance can be further improved.

When a total volume of the pores 2 having a mode diameter of 68 nm or less is less than 10% with respect to a total volume of the pores 2, heat is transferred by the convection and the heat conduction, so that an excellent heat insulation performance cannot be obtained. Therefore, the total volume of the pores 2 having a mode diameter of 68 nm or less is 10% or more, and preferably 15% or more, with respect to the total volume of the pores 2.

On the other hand, in the present embodiment, the upper limit of a total volume ratio of the pores 2 having a mode diameter of 68 nm or less is not particularly limited.

Note that, the heat transfer suppression sheet according to the present embodiment may contain various components in addition to the dry silica particle, but the ratio of the total volume of the pores of 68 nm or less does not change unless a large amount of a nano-order material is intentionally contained.

Here, the mode diameter and the volume of the pores 2 formed inside the heat transfer suppression sheet 10 can be determined by mercury intrusion porosimetry. In addition, a total volume ratio Vr of the pores 2 having a mode diameter of 68 nm or less can be calculated according to the following equation.

$$Vr = (Vs/Va) \times 100$$

Vs represents the total volume of the pores 2 having a mode diameter of 68 nm or less, and Va represents the total volume Va of all pores. In addition, Vr represents the total volume ratio of the pores 2 having a mode diameter of 68 nm or less.

(Total volume of pores: 2.0 (cc/g) or more)

The heat transfer suppression sheet according to the present embodiment contains the dry silica particle having an average primary particle diameter of 25 nm or less, and has a plurality of pores formed therein. In particular, by producing the heat transfer suppression sheet by a dry method, the total volume of the pores having all sizes can be increased, and accordingly, the heat insulation property can be improved. Therefore, the total volume of the pores is preferably 2.0 (cc/g) or more per unit mass of the heat transfer suppression sheet.

Note that, as shown in Fig. 4, the mode diameter of the pores formed in the heat transfer suppression sheet 10 is proportional to the average primary particle diameter of the dry silica particle 1. In addition, as shown in Fig. 5, as the average primary particle diameter of the dry silica particle 1 increases, the volume ratio of the pores of 68 nm or less decreases. In particular, in the case where the average primary particle diameter of the dry silica particle 1 is more than 25 nm, the volume ratio of the pores of 68 nm or less is less than 10%, and the heat insulation performance remarkably decreases. From these results, it is found that it is necessary to use the dry silica particle 1 having an average primary particle diameter of 25 nm or less in order to control the volume ratio of the pores of 68 nm or less within the above range.

Next, the components contained in the heat transfer suppression sheet according to the present embodiment will be described in more detail.

<Other Inorganic Particles>

The heat transfer suppression sheet 10 according to the present embodiment may contain only the dry silica particle as an inorganic particle or may contain other inorganic particles. From the viewpoint of a heat transfer suppression effect, as the kind of the other inorganic particles, a particle composed of at least one kind of inorganic material selected from an oxide particle, a carbide particle, a nitride particle, and an inorganic hydrate particle is preferably used, and more preferably an oxide particle is used. The form thereof is not particularly limited. It is preferable to contain at least one kind selected from a hollow particle and a porous particle. Specifically, an inorganic balloon such as a microporous particle or a hollow silica particle, a particle composed of a thermally expandable inorganic material, a particle composed of a hydrous porous material, or the like can also be used.

Note that, when one or two or more kinds of inorganic particles having different heat transfer suppression effects are combined in addition to the above dry silica particle 1, a heating element can be cooled in multiple stages and a heat absorption effect can be exhibited over a wider temperature range. Specifically, when used in mixture with a large-diameter particle, the small-diameter dry silica particle enters gaps between the large-diameter inorganic particles, leading to a more dense structure, and the heat transfer suppression effect can be improved. Hereinafter, the inorganic particle other than the dry silica particle that may be contained in the heat transfer suppression sheet 10 according to the present embodiment will be described in more detail.

(Oxide Particle)

The oxide particle has a high refractive index and has a high effect of diffusely reflecting light, so that when the oxide particle is used, radiant heat transfer can be suppressed, particularly in a high temperature range with abnormal heat generation or the like. As the oxide particle, at least one kind of metal oxide particle selected from titania, zirconia, zircon, barium titanate, zinc oxide, and alumina is preferably used. Note that, in addition to the dry silica particle 1, only one kind of the above oxide particles may be contained, or two or more kinds of the above oxide particles may be contained. Particularly, titania is a component having a high refractive index compared to other metal oxides, and has a high effect of diffusely reflecting light and blocking radiant heat in a high temperature range of 500°C or higher. Therefore, in the present embodiment, titania is preferably contained in addition to the dry silica particle 1.

(Average primary particle diameter of oxide particle: 1 $\mu$m or more and 50 $\mu$m or less)

In the present embodiment, the average primary particle diameter of the dry silica particle 1 is as described above, but other oxide particles that may be contained in the heat transfer suppression sheet 10 may influence the effect of reflecting the radiant heat. Therefore, when the average primary particle diameter of the other oxide particles is also limited to a predetermined range, an even higher heat insulation property can be obtained.

That is, when the average primary particle diameter of the oxide particle other than the dry silica particle 1 is 1 $\mu$m or more, a wavelength thereof is sufficiently larger than a wavelength of light that contributes to heating, and it diffusely reflects the light efficiently. Therefore, in a high temperature range of 500°C or higher, the radiant heat transfer of heat within the heat transfer suppression sheet can be suppressed, and the heat insulation property can be further improved.

On the other hand, when the average primary particle diameter of the oxide particle other than the dry silica particle 1 is 50 $\mu$m or less, even with compression, the number of contact points between the particles does not increase, and it is difficult to form a conductive heat transfer path. Therefore, the influence on the heat insulation property particularly in a normal temperature range where the conductive heat transfer is dominant can be reduced.

Therefore, the average primary particle diameter of the oxide particle other than the dry silica particle 1 is preferably 1 $\mu$m or more and 50 $\mu$m or less, more preferably 5 $\mu$m or more and 30 $\mu$m or less, and most preferably 10 $\mu$m or less.

Note that, in the present embodiment, the average primary particle diameter of the particle contained in the heat transfer suppression sheet 10 can be determined by observing particles with a microscope, comparing the particles with a standard scale, and taking an average of any 10 particles.

(Carbide Particle)

Examples of the carbide particles include silicon carbide.

(Inorganic Hydrate Particle)

The inorganic hydrate particle exhibits a so-called "heat absorption effect" that the inorganic hydrate particle receives heat from the heating element, thermally decomposes when reaching a thermal decomposition start temperature or higher, releases crystal water thereof, and lowers the temperature of the heating element and surroundings. The inorganic hydrate particle forms a porous material after releasing the crystal water, and exhibits a heat insulation effect due to countless air pores thereof.

Specific examples of the inorganic hydrate include aluminum hydroxide ($Al(OH)_3$), magnesium hydroxide ($Mg(OH)_2$), calcium hydroxide ($Ca(OH)_2$), zinc hydroxide ($Zn(OH)_2$), iron hydroxide ($Fe(OH)_2$), manganese hydroxide ($Mn(OH)_2$), zirconium hydroxide ($Zr(OH)_2$), and gallium hydroxide ($Ga(OH)_3$).

For example, aluminum hydroxide has about 35% crystal water, and as shown in the following formula, thermally decomposes to release the crystal water and exhibits a heat absorption effect. Then, after releasing the crystal water, aluminum hydroxide forms alumina ($Al_2O_3$), which is a porous material, and functions as a heat insulation material.

$$2Al(OH)_3 \rightarrow Al_2O_3 + 3H_2O$$

Note that, as to be described later, the heat transfer suppression sheet 10 according to the present embodiment is preferably interposed between, for example, battery cells, but in a battery cell that has experienced thermal runaway, the temperature rapidly rises to over 200°C and continues to rise to about 700°C. Therefore, it is also preferable to contain an inorganic particle composed of an inorganic hydrate whose thermal decomposition start temperature is 200°C or higher.

The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell that has experienced thermal runaway, and can effectively prevent the temperature rise. Therefore, these are preferred inorganic hydrates.

(Average secondary particle diameter of inorganic hydrate particle: 0.01 μm or more and 200 μm or less)

In the case where the heat transfer suppression sheet contains an inorganic hydrate particle, when an average particle diameter thereof is too large, it takes a certain amount of time for the inorganic hydrate particle near the center of the heat transfer suppression sheet 10 to reach the thermal decomposition temperature thereof, so that the inorganic hydrate particle near the center of the sheet may not be completely thermally decomposed. Therefore, the average secondary particle diameter of the inorganic hydrate particle is preferably 0.01 μm or more and 200 μm or less, and more preferably 0.05 μm or more and 100 μm or less.

(Particle Composed of Thermally Expandable Inorganic Material)

The heat transfer suppression sheet 10 preferably contains a particle made of a thermally expandable inorganic material. Examples of the thermally expandable inorganic material include vermiculite, bentonite, mica, and perlite.

(Particle Composed of Hydrous Porous Material)

The heat transfer suppression sheet 10 preferably contains a particle made of a hydrous porous material. Specific examples of the hydrous porous material include zeolite, kaolinite, montmorillonite, acid clay, diatomaceous earth, aerogel, mica, and vermiculite.

(Inorganic Balloon)

The heat transfer suppression sheet 10 preferably contains an inorganic balloon. Since the inorganic balloon has an effect of suppressing the convective heat transfer or the conductive heat transfer of the heat within the heat transfer suppression sheet 10 in a temperature range of lower than 500°C, the heat insulation performance of the heat transfer suppression sheet 10 can be further improved. As the inorganic balloon, at least one kind selected from a whitebait balloon, a silica balloon, a fly ash balloon, a perlite balloon, and a glass balloon can be used.

Note that, a content of the inorganic particle in the heat transfer suppression sheet 10 can be calculated, for example, by heating the heat transfer suppression sheet at 800°C, decomposing organic components, and then measuring the mass of the remaining portion.

In addition, the heat transfer suppression sheet 10 according to the present embodiment may contain an organic fiber and an inorganic fiber in addition to the dry silica particle 1 and other inorganic particles described above. Further, all of these fibers and particles may be retained by the binder portion 3 containing an organic material.

<Organic Fiber>

When the heat transfer suppression sheet 10 contains an organic fiber, the strength and the shape of the sheet can be maintained. The organic material constituting the organic fiber is not particularly limited, and examples thereof include an organic fiber composed of at least one kind selected from a polyethylene terephthalate, a polyethylene, a polypropylene, and nylon.

(Fiber Length of Organic Fiber)

A fiber length of the organic fiber is not particularly limited, and from the viewpoint of ensuring moldability and processability, an average fiber length of the organic fiber is preferably 10 mm or less.

On the other hand, from the viewpoint of making the organic fiber function as a framework and ensuring a compressive strength of the heat transfer suppression sheet, the average fiber length of the organic fiber is preferably 0.5 mm or more.

(Content of Organic Fiber)

In the present embodiment, when a content of the organic fiber in the heat transfer suppression sheet 10 is appropriately controlled, a sufficient framework reinforcement effect can be obtained.

The content of the organic fiber is preferably 5 mass% or more, and more preferably 10 mass% or more, with respect to a total mass of the heat transfer suppression sheet 10. When the content of the organic fiber is too large, the content of the dry silica particle 1 decreases relatively. Therefore, in order to obtain a desired heat insulation performance, the content of the organic fiber is preferably 25 mass% or less, and more preferably 20 mass% or less, with respect to the total mass of the heat transfer suppression sheet.

(Binder Fiber Having Core-sheath Structure)

The organic fiber may include a binder fiber having a core-sheath structure including a core portion extending in a longitudinal direction of the fiber and a sheath portion formed to cover an outer peripheral surface of the core portion. In the binder fiber having a core-sheath structure, an organic material constituting the sheath portion preferably has a melting point lower than that of an organic material constituting the core portion. Depending on the temperature at which the heat transfer suppression sheet 10 is produced and the melting points of the organic materials constituting the core portion and the sheath portion, only the shape of the organic fiber in the core portion remains, and the sheath portion, including the inorganic particle, becomes the binder portion, and has a part thereof fused to the core portion during the production of the heat transfer suppression sheet. In this manner, when the binder fiber having a core-sheath structure is used, it is possible to achieve both an effect of retaining the strength and the shape of the heat transfer suppression sheet 10 and an effect of improving a retention property for the inorganic particle, including the dry silica particle 1, and other materials.

Note that, even in the case where an organic fiber without a core-sheath structure is used, depending on temperature setting, it is possible that only the surface of the organic fiber is melted while the core portion thereof remains, and the inorganic particle is deposited on the surface. Accordingly, it is possible to achieve both the effect of retaining the strength and the shape of the heat transfer suppression sheet 10 and the effect of improving the retention property for the inorganic particle and the like. However, since it is difficult to adjust the temperature during production, in the case of using an organic fiber as the material constituting the heat transfer suppression sheet 10, it is more preferable to use a binder fiber having a core-sheath structure.

As the organic material constituting the core portion, at least one kind selected from a polyethylene terephthalate, a polypropylene, and nylon can be selected. In addition, as the organic material constituting the sheath portion, at least one kind selected from a polyethylene terephthalate, a polyethylene, a polypropylene, and nylon can be selected. The melting point of the organic material constituting the sheath portion is preferably 90°C or higher, more preferably 100°C or higher, and is preferably 150°C or lower, more preferably 130°C or lower. In addition, the melting point of the organic material constituting the core portion is preferably 60°C or more higher, more preferably 70°C or more higher, and still more preferably 80°C or more higher than the melting point of the organic material constituting the sheath portion.

The binder fiber having a core-sheath structure as described above is generally commercially available, and the materials constituting the core portion and the sheath portion may be the same as or different from each other. Examples of the binder fiber in which the core portion and the sheath portion are composed of the same material having different melting points include one in which the core portion and the sheath portion are composed of a polyethylene terephthalate, one in which the core portion and the sheath portion are composed of a polypropylene, and one in which the core portion and the sheath portion are composed of nylon. Examples of the binder fiber in which the core portion and the sheath portion are composed of different materials include one in which the core portion is composed of a polyethylene terephthalate and the sheath portion is composed of a polyethylene, and one in which the core portion is composed of a polypropylene and the sheath portion is composed of a polyethylene.

In the present embodiment, the melting point of the organic material constituting the sheath portion of the binder fiber refers to a melting temperature at which the organic material begins to undergo melting deformation, and softening accompanied by a change in shape is also considered to be a kind of melting deformation. The melting point of the sheath portion of the binder fiber can be measured, for example, by the following method.

A binder fiber to be measured is disposed in contact with a glass fiber having a higher melting point, heated from room temperature to, for example, 200°C at a heating rate of 5°C/min, and thereafter cooled to room temperature. At this time, when the surface of the binder fiber undergoes melting deformation and is fused at a portion in contact with the glass fiber, or the cross-sectional shape of the binder fiber changes, it can be determined that the melting point of the organic material constituting the sheath portion is 200°C or lower. In the present embodiment, when the heating temperature is changed variously, and the fusion state of the binder fiber and the glass fiber after cooling by the above method or the cross-sectional shape of the binder fiber is observed, the melting point of the organic material constituting the sheath portion can be determined.

(Other Organic Materials)

The heat transfer suppression sheet 10 according to the present embodiment may contain a hot melt powder as other organic materials. The hot melt powder is a powder having a property of being melted by heating. In the case of using a hot melt powder as the material for the heat transfer suppression sheet 10, the hot melt powder is melted by heating a material mixture during the production of the heat transfer suppression sheet 10. Thereafter, when the material mixture is cooled, the hot melt powder in a molten state, including the surrounding materials such as the dry silica particle 1, hardens, and the binder portion 3 is formed. Accordingly, a retention force for the material can be further increased. Note that, examples of the component constituting the hot melt powder include a polyethylene, a polyester, a polyamide, and ethylene vinyl acetate.

[Method for Producing Heat Transfer Suppression Sheet]

The method for producing the heat transfer suppression sheet 10 according to the present embodiment includes a processing step of processing a material mixture containing the dry silica particle 1 into a sheet shape by a dry method. The method for producing a heat transfer suppression sheet will be described in more detail.

(Processing Step)

First, the dry silica particle 1 and any material, for example, a binder material, are charged into a mixer such as a V-type mixer at a predetermined ratio to prepare a material mixture. In the present embodiment, since the heat transfer suppression sheet 10 is to be produced by a dry method, a solvent such as water, which is necessary for molding by a wet method, is not added to the material mixture. However, in the present embodiment, during the production of the heat transfer suppression sheet 10, in order to prevent a powder such as the dry silica particle 1 from flying around and prevent raw materials from being difficult to handle, a small amount of a solvent such as water may be added within the range of the dry method. For example, by adding a small amount of a solvent such as water to the material mixture, scattering of the dry silica particle 1 during the production can be further suppressed.

Thereafter, the obtained material mixture is charged into a predetermined mold and pressurized with a pressing machine or the like, and the obtained molded body (not shown) is heated. At this time, the binder material is melted by heating. Thereafter, when the heated material mixture is cooled, the binder material in a molten state, including the surrounding materials such as the dry silica particle 1, hardens, and the binder portion 3 is formed. Accordingly, the heat transfer suppression sheet 10 processed into a sheet shape can be obtained.

In the present invention, production conditions such as pressurization conditions are not particularly limited. The heat transfer suppression sheet 10 can be obtained by appropriately adjusting the mass of the material mixture, the volume of a mold for processing the heat transfer suppression sheet 10 into a sheet shape, and the like.

The dry silica particle 1 used in the production method according to the present embodiment is the dry silica particle 1 described above in the section of [Heat Transfer Suppression Sheet], and has an average primary particle diameter of 25 nm or less. In this manner, by using the dry silica particle 1 having a strictly controlled average primary particle diameter, the total volume of the pores 2 having a mode diameter of 68 nm or less can be 10% or more with respect to the total volume of the pores. As a result, as described above, the heat insulation property can be further improved as compared to a heat transfer suppression sheet in the related art.

Note that, in the case of using the binder fiber having a core-sheath structure as the binder material, the sheath portion can be melted while the core portion remains by appropriately adjusting the heating temperature. Specifically, the heating temperature is preferably a temperature higher than the melting point of the organic material constituting the sheath portion and lower than the melting point of the organic material constituting the core portion.

The heating temperature in the heating step is set to preferably 10°C or more higher, and more preferably 20°C or more higher than the melting point of the organic material constituting the sheath portion. On the other hand, the heating temperature is set to preferably 10°C or more lower, and more preferably 20°C or more lower than the melting point of the organic fiber constituting the core portion. In addition, a heating time is not particularly limited, and it is preferable to set a heating time that allows the sheath portion to be sufficiently melted. For example, it can be set to 3 minutes or longer and 15 minutes or shorter.

In the heat transfer suppression sheet according to the present embodiment, in the case of using the binder fiber having a core-sheath structure as the binder material, the strength of the heat transfer suppression sheet can be ensured by the core portion by cooling the material mixture after melting the sheath portion while the core portion remains. In addition, since the binder portion 3 containing the dry silica particle and the like is formed after cooling, the dry silica particle and the like can be retained. In addition, since the binder portion is fused around the core portion in a state of containing the dry silica particle, and the core portion has a large fiber diameter, the heat transfer suppression sheet having a high strength can be obtained. Further, when the binder fiber having a core-sheath structure is present in the material mixture in an irregular direction and the binder fibers are partially in contact with each other, adjacent core portions are fused to each other by the binder portion formed by the melting of the sheath portions to form a three-dimensional framework. As a result, the shape of the entire heat transfer suppression sheet can be retained with an even higher strength.

Note that, an adhesive such as a hot melt powder can also be used as the material for the heat transfer suppression sheet 10. When the kind and the content of the hot melt powder are appropriately adjusted, the retention force for the dry silica particle 1 and the like can be improved, and powder falling can be further suppressed.

In order to further suppress the powder falling, the surface of the heat transfer suppression sheet 10 may be covered with a film or the like. Examples of a polymer film include a film composed of a polyimide, a polycarbonate, PET, p-phenylene sulfide, a polyetherimide, a cross-linked polyethylene, a flame-retardant chloroprene rubber, polyvinylidene fluoride, rigid vinyl chloride, polybutylene terephthalate, PTFE, PFA, FEP, ETFE, rigid PCV, flame-retardant PET, a polystyrene, a polyethersulfone, a polyamide-imide, a polyacrylonitrile, a polyethylene, a polypropylene, and a polyamide.

The method of covering the surface of the heat transfer suppression sheet 10 with a film is not particularly limited, and examples thereof include a method of performing pasting with an adhesive or the like, a method of wrapping the heat transfer suppression sheet 10 in a film, a method of shrink-wrapping the heat transfer suppression sheet 10 in a film, and a method of housing the heat transfer suppression sheet 10 in a bag-shaped film.

In the method for producing a heat transfer suppression sheet according to the present embodiment, the contents of the dry silica particle 1, and other inorganic particles and organic fibers which may be contained as materials with respect to a total mass of solid components in the material mixture is the same as the preferred contents of the components in the heat transfer suppression sheet 10. That is, the content of the dry silica particle 1 with respect to the total mass of the solid components in the material mixture is preferably 50 mass% or more. In addition, the content of the dry silica particle 1 with respect to the total mass of the solid components in the material mixture is preferably 80 mass% or less.

In addition, in order to obtain the framework reinforcement effect and the material retention effect, in the case of mixing the organic fiber (binder fiber having a core-sheath structure) in the material mixture, the content of the organic fibers with respect to the total mass of the solid components in the material mixture is preferably 5 mass% or more, and more preferably 10 mass% or more. On the other hand, in order to obtain a desired heat insulation performance, the content of the organic fiber with respect to the total mass of the solid components in the material mixture is preferably 25 mass% or less, and more preferably 20 mass% or less.

In order to obtain the powder falling suppression effect, in the case of mixing the hot melt powder in the material mixture, the content of the hot melt powder with respect to the total mass of the solid components in the material mixture is preferably 0.5 mass% or more, and more preferably 1 mass% or more. In addition, in order to obtain a desired heat insulation performance, in the case of mixing the hot melt powder in the material mixture, the content of the hot melt powder with respect to the total mass of the solid components in the material mixture is preferably 5 mass% or less, and more preferably 4 mass% or less.

<Thickness of Heat Transfer Suppression Sheet>

A thickness of the heat transfer suppression sheet 10 according to the present embodiment is not particularly limited, and is preferably 0.05 mm or more and 10 mm or less. When the thickness is 0.05 mm or more, a sufficient compressive strength can be obtained. On the other hand, when the thickness is 10 mm or less, a good heat insulation property of the heat transfer suppression sheet 10 can be obtained.

[Battery Pack]

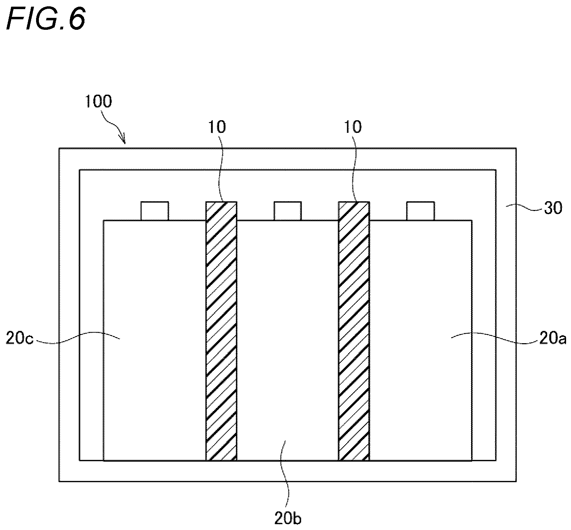

Fig. 6 is a schematic diagram showing a battery pack according to an embodiment of the present invention. A battery pack 100 according to the present embodiment includes a plurality of battery cells 20a, 20b, and 20c, and the heat transfer suppression sheet 10 according to the present embodiment, and the plurality of battery cells 20a, 20b, and 20c are connected in series or in parallel.

For example, as shown in Fig. 6, the heat transfer suppression sheet 10 according to the present embodiment is interposed between the battery cell 20a and the battery cell 20b and between the battery cell 20b and the battery cell 20c. Further, the battery cells 20a, 20b, and 20c and the heat transfer suppression sheet 10 are housed in a battery case 30.

Note that, the heat transfer suppression sheet 10 is as described above.

In the battery pack 100 configured in this manner, even in the case where a certain battery cell 20a has a high temperature, since the heat transfer suppression sheet 10 having an excellent heat transfer suppression effect is present between the battery cell 20a and the battery cell 20b, it is possible to suppress the propagation of heat to the battery cell 20b.

In addition, since the heat transfer suppression sheet 10 according to the present embodiment contains the dry silica particle 1 and has a high compressive strength, thermal expansion of the battery cells 20a, 20b, and 20c can also be suppressed during charging and discharging of the battery cells. Therefore, a distance between the battery cells can be ensured, an excellent heat insulation performance can be maintained, and the thermal runaway of the battery cells can be prevented.

Note that, the battery pack 100 according to the present embodiment is not limited to the battery pack illustrated in Fig. 6. Specifically, the heat transfer suppression sheet 10 can be disposed not only between the battery cell 20a and the battery cell 20b or between the battery cell 20b and the battery cell 20c, but also between the battery cells 20a, 20b, and 20c and the battery case 30.

In the battery pack 100 configured in this manner, in the case where a certain battery cell ignites, it is possible to suppress the flame from spreading to the outside of the battery case 30.

For example, the battery pack 100 according to the present embodiment is used in an electric vehicle (EV) or the like, and is sometimes disposed under a passenger's floor. In this case, even when the battery cell ignites, the safety of the passenger can be ensured.

In addition, since the heat transfer suppression sheet 10 can be disposed not only between the battery cells but also between the battery cells 20a, 20b, and 20c and the battery case 30, it is not necessary to newly prepare a flame retardant material or the like, and a safe battery pack 100 can be easily formed at a low cost.

In the battery pack according to the present embodiment, the heat transfer suppression sheet 10 disposed between the battery cells 20a, 20b, and 20c and the battery case 30 may be in contact with the battery cell or may have a gap therebetween. However, in the case where there is a gap between the heat transfer suppression sheet 10 and the battery cells 20a, 20b, and 20c, even when the temperature of any one battery cell of the plurality of battery cells rises and the volume expands, the deformation of the battery cell is allowable.

Note that, the heat transfer suppression sheet 10 according to the present embodiment can be produced into various shapes depending on the production method. Therefore, it is not influenced by the shapes of the battery cells 20a, 20b, and 20c and the battery case 30, and can be adapted to any shape. Specifically, it can be applied to cylindrical batteries, flat batteries, and the like, in addition to prismatic batteries.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that, the present application is based on a Japanese patent application (Japanese Patent Application No. 2023-053781) filed on March 29, 2023, and the contents thereof are incorporated herein by reference.

REFERENCE SIGNS LIST

1 dry silica particle
2 pore
3 binder portion
4 heat conduction
10 heat transfer suppression sheet
20a, 20b, 20c battery cell
30 battery case
100 battery pack

**Claims**

1. A heat transfer suppression sheet comprising a dry silica particle, wherein

   the heat transfer suppression sheet has pores,
   the dry silica particle has an average primary particle diameter of 25 nm or less, and
   a total volume of the pores having a mode diameter of 68 nm or less is 10% or more with respect to a total volume of the pores.

2. The heat transfer suppression sheet according to claim 1, wherein the average primary particle diameter of the dry silica particle is 7 nm or more.

3. The heat transfer suppression sheet according to claim **1,** wherein the total volume of the pores is 2.0 (cc/g) or more.

4. The heat transfer suppression sheet according to claim **1,** wherein a content of the dry silica particle is 50 mass% or more and 80 mass% or less with respect to a total mass of the heat transfer suppression sheet.

5. The heat transfer suppression sheet according to claim **1,** further comprising:
   at least one kind of inorganic particle selected from titania, zircon, zirconia, silicon carbide, zinc oxide, and alumina.

6. The heat transfer suppression sheet according to claim **1,** further comprising:
   an organic fiber.

7. A method for producing a heat transfer suppression sheet according to any one of claims 1 to 6, the method comprising:

a processing step of processing a material mixture containing the dry silica particle into a sheet shape by a dry method, wherein

the dry silica particle has an average primary particle diameter of 25 nm or less.

8. The method for producing a heat transfer suppression sheet according to claim 7, wherein the content of the dry silica particle is 50 mass% or more and 80 mass% or less with respect to a total mass of a solid component in the material mixture.

9. The method for producing a heat transfer suppression sheet according to claim 7, wherein

the material mixture comprises an organic fiber, and

the organic fiber comprises a binder fiber having a core-sheath structure including a core portion extending in a longitudinal direction thereof and a sheath portion formed to cover an outer peripheral surface of the core portion.

10. A battery pack comprising:

a plurality of battery cells; and

the heat transfer suppression sheet according to any one of claims 1 to 6, wherein

the plurality of battery cells are connected in series or in parallel.

*FIG.1*

## FIG. 2

AVERAGE PRIMARY PARTICLE DIAMETER (nm)

EP 4 693 608 A1

*FIG. 3*

68 nm: MEAN FREE PATH OF AIR

AVERAGE PRIMARY
PARTICLE DIAMETER
OF DRY SILICA
PARTICLE

30nm
20nm
12nm
7nm

MODE DIAMETER (nm) OF PORES

PORE VOLUME (cc/g)

2.5   2   1.5   1   0.5   0

10   100   1000   10000

# FIG.4

AVERAGE PRIMARY PARTICLE DIAMETER (nm) OF DRY SILICA PARTICLE

## FIG.5

AVERAGE PRIMARY PARTICLE DIAMETER (nm) OF DRY
SILICA PARTICLE

*FIG.6*

## INTERNATIONAL SEARCH REPORT

| International application No. |
|---|
| **PCT/JP2024/004664** |

| A. | CLASSIFICATION OF SUBJECT MATTER |
|---|---|

*H01M 10/613*(2014.01)i; *F16L 59/02*(2006.01)i; *H01M 10/625*(2014.01)i; *H01M 10/651*(2014.01)i; *H01M 10/658*(2014.01)i
FI:   H01M10/613; F16L59/02; H01M10/625; H01M10/651; H01M10/658

According to International Patent Classification (IPC) or to both national classification and IPC

| B. | FIELDS SEARCHED |
|---|---|

Minimum documentation searched (classification system followed by classification symbols)

H01M10/613; F16L59/02; H01M10/625; H01M10/651; H01M10/658

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2022-37091 A (IBIDEN CO., LTD.) 08 March 2022 (2022-03-08)<br>paragraphs [0041]-[0045], fig. 1-3 | 1-10 |
| A | JP 2012-250882 A (ASAHI KASEI CHEMICALS CORPORATION) 20 December 2012 (2012-12-20)<br>paragraphs [0008], [0025]-[0045], fig. 1-2 | 1-10 |
| A | JP 2023-29174 A (IBIDEN CO., LTD.) 03 March 2023 (2023-03-03)<br>entire text, all drawings | 1-10 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/004664**

| Patent document cited in search report | | | Publication date (day/month/year) | Patent family member(s) | | | Publication date (day/month/year) |
|---|---|---|---|---|---|---|---|
| JP | 2022-37091 | A | 08 March 2022 | US | 2023/0118928 | A1 | |
| | | | | paragraphs [0067]-[0077], fig. 1-3 | | | |
| | | | | EP | 4181272 | A1 | |
| | | | | KR | 10-2022-0025197 | A | |
| | | | | CN | 114258608 | A | |
| JP | 2012-250882 | A | 20 December 2012 | (Family: none) | | | |
| JP | 2023-29174 | A | 03 March 2023 | WO | 2023/112972 | A1 | |
| | | | | entire text, all drawings | | | |
| | | | | CN | 219066972 | U | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021034278 A
- JP 2023053781 A